# EUROPEAN PATENT APPLICATION

(11) **EP 4 564 555 A1**
(43) Date of publication of application: **04.06.2025**
(21) Application number: 24209796.2
(22) Date of filing: 30.10.2024
(51) Int. Cl.: H01M 50/209, H01M 50/342, H01M 50/507, H01M 50/593

(54) **BATTERY MODULE**

(30) Priority: 30.11.2023 KR 20230170556
(71) Applicant: Samsung SDI Co., Ltd., Gyeonggi-do 17084 (KR)
(72) Inventor: KIM, Jeong Ho, 17084 Yongin-si (KR); JEON, Du Seong, 17084 Yongin-si (KR); PARK, Jun Hwa, 17084 Yongin-si (KR); KIM, Myung Chul, 17084 Yongin-si (KR); KIM, Dong Hyeong, 17084 Yongin-si (KR); NAM, Jin Won, 17084 Yongin-si (KR); KIM, Jung Soo, 17084 Yongin-si (KR); KIM, Beom Joo, 17084 Yongin-si (KR)
(74) Representative: Marks & Clerk LLP

(57) **Abstract**

A battery module including battery cells arranged in a horizontal direction. Each of the battery cells includes a cell vent, a positive electrode terminal, and a negative electrode terminal. The battery module also includes a heat-resistant portion potted on the battery cells. The heat-resistant portion includes a heat-resistant vent provided in an area corresponding to the cell vent and a heat-resistant support portion provided outside the heat-resistant vent. The battery module also includes a bus bar holder on the heat-resistant portion. The bus bar holder includes a holder vent hole in an area corresponding to the heat-resistant vent and a bus bar hole in an area corresponding to the positive electrode terminal and the negative electrode terminal. The battery module further includes bus bars on the heat-resistant portion and connected to the positive and negative electrode terminals of the battery cells.

## Description

### BACKGROUND

### 1. Field

The present disclosure relates to a battery module.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

The present disclosure provides a battery module capable of preventing heat propagation and thermal runaway.

These and other aspects and features of the present disclosure will be described in or will be apparent from the following description of embodiments of the present disclosure.

A battery module according to an embodiment of the present disclosure for solving the technical problem may include: a plurality of battery cells arranged in a horizontal direction, each of the plurality of battery cells including a cell vent, a positive electrode terminal, and a negative electrode terminal; a heat-resistant portion potted on the plurality of battery cells, the heat-resistant portion including a heat-resistant vent provided in an area corresponding to the cell vent and a heat-resistant support portion provided outside the heat-resistant vent; a bus bar holder disposed on the heat-resistant portion, the bus bar holder including a holder vent hole provided in an area corresponding to the heat-resistant vent and a bus bar hole provided in an area corresponding to the positive electrode terminal and the negative electrode terminal; and a plurality of bus bars disposed on the heat-resistant portion and connected to the positive and negative electrode terminals of the plurality of battery cells.

In some embodiments, the heat-resistant vent may include a notch.

In some embodiments, the depth of the notch may be about 1/3 to about 2/3 of the thickness of the heat-resistant vent.

In some embodiments, the planar shape of the notch may include a cross shape.

In some embodiments, the heat-resistant vent may contact the cell vent.

In some embodiments, the thickness of the heat-resistant vent may be greater than the thickness of the heat-resistant support portion.

In some embodiments, the heat-resistant vent may protrude downward from the heat-resistant support portion.

In some embodiments, the cell vent may be coupled to a lower portion of the cell vent hole of the battery cell, and the heat-resistant vent may be coupled to the cell vent hole.

In some embodiments, the heat-resistant portion may include epoxy or silicone.

In some embodiments, the upper surface of the heat-resistant vent and the upper surface of the heat-resistant support portion may be coplanar.

In some embodiments, the heat-resistant vent may protrude upward from the heat-resistant support portion.

In some embodiments, the heat-resistant vent may be coupled to the holder vent hole.

In some embodiments, a surface of the heat-resistant vent may be coplanar with an upper surface of the bus bar holder.

A method for manufacturing a battery module according to an embodiment of the present disclosure for solving the technical problem, may include: providing a plurality of battery cells arranged in a horizontal direction, each of the plurality of battery cells including a cell vent, a positive electrode terminal, and a negative electrode terminal; potting a heat-resistant portion on the plurality of battery cells, the heat-resistant portion including a heat-resistant vent provided in an area corresponding to the cell vent and a heat-resistant support portion provided outside the heat-resistant vent; providing a bus bar holder disposed on the heat-resistant portion, the bus bar holder including a holder vent hole provided in an area corresponding to the heat-resistant vent and a bus bar hole provided in an area corresponding to the positive electrode terminal and the negative electrode terminal; and providing a plurality of bus bars disposed on the heat-resistant portion and connecting the positive and negative electrode terminals of the plurality of battery cells.

A method for manufacturing a battery module according to an embodiment of the present disclosure for solving the technical problem, may include: providing a plurality of battery cells arranged in a horizontal direction, each of the plurality of battery cells including a cell vent, a positive electrode terminal, and a negative electrode terminal; providing a bus bar holder disposed on the plurality of battery cells, the bus bar holder including a holder vent hole provided in an area corresponding to the cell vent and a bus bar hole provided in an area corresponding to the positive electrode terminal and the negative electrode terminal; potting a heat-resistant portion between the plurality of battery cells and the bus bar holder, the heat-resistant portion including a heat-resistant vent provided in an area corresponding to the cell vent and a heat-resistant support portion provided outside the heat-resistant vent; and providing a plurality of bus bars disposed on the heat-resistant portion and connecting the positive and negative electrode terminals of the plurality of battery cells.

At least some of the above and other features of the invention are set out in the claims.

As described above, according to the present invention, a battery module capable of preventing heat propagation and thermal runaway is provided.

However, the aspects and features of the present disclosure are not limited to those described above, and other aspects and features not expressly described herein will be clearly understood by a person skilled in the art from the description of example embodiments of the present disclosure described below.

### BRIEF DESCRIPTION OF DRAWINGS

FIG. 1A is a perspective view of a prismatic battery according to an embodiment of the present disclosure;
FIG. 1B is a cross-sectional view taken along the line 1b-1b in FIG. 1A.
FIG. 2 is a perspective view of a battery module according to an embodiment of the present disclosure;
FIGS. 3A and 3B are perspective views of a battery pack according to an embodiment of the present disclosure;
FIGS. 4A and 4B show examples of vehicle bodies and body parts to which one or more embodiments of the present disclosure may be applied;
FIGS. 5A to 5D illustrate a method for charging a secondary battery according to an embodiment of the present disclosure;
FIG. 6 is a perspective view showing an example battery module according to the present disclosure.
FIG. 7 is an enlarged view of a partial area of FIG. 6.
FIG. 8 is an enlarged cross-sectional perspective view cut away from a portion of FIG. 6.
FIG. 9 is an enlarged cross-sectional view cut away from a portion of FIG. 6.
FIG. 10 is a flow chart showing a method for manufacturing an example battery module according to the present disclosure.
FIG. 11 is a flow chart showing a method for manufacturing an example battery module according to the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

A battery pack according to one or more embodiments includes at least one battery module and a pack housing having an accommodation space in which the at least one battery module is accommodated.

The battery module may include a plurality of battery cells and a module housing. The battery cells may be accommodated inside the module housing in a stacked form (or stacked arrangement or configuration). Each battery cell may have a positive electrode terminal and a negative electrode terminal and may be a circular type, a prismatic type, or a pouch type according to the shape of battery. In the present specification, a battery cell may also be referred to as a secondary battery, a battery, or a cell.

In the battery pack, one cell stack may constitute one module stacked in place of the battery module. The cell stack may be accommodated in an accommodation space of the pack housing or may be accommodated in an accommodation space partitioned by a frame, a partition wall, etc.

The battery cell may generate a large amount of heat during charging/discharging. The generated heat may be accumulated in the battery cell, thereby accelerating the deterioration of the battery cell. Accordingly, the battery pack may further include a cooling member to remove the generated heat and thereby suppress deterioration of the battery cell. The cooling member may be provided at the bottom of the accommodation space at where the battery cell is provided but is not limited thereto and may be provided at the top or side depending on the battery pack.

The battery cell may be configured such that exhaust gas generated inside the battery cell under abnormal operating conditions, also known as thermal runaway or thermal events, is discharged to the outside of the battery cell. The battery pack or the battery module may include an exhaust port for discharging the exhaust gas to prevent or reduce damage to the battery pack or module by the exhaust gas.

The battery pack may include a battery and a battery management system (BMS) for managing the battery. The battery management system may include a detection device, a balancing device, and a control device. The battery module may include a plurality of cells connected to each other in series and/or parallel. The battery modules may be connected to each other in series and/or in parallel.

The detection device may detect a state of a battery (e.g., voltage, current, temperature, etc.) to output state information indicating the state of the battery. The detection device may detect the voltage of each cell constituting the battery or of each battery module. The detection device may detect current flowing through each battery module constituting the battery module or the battery pack. The detection device may also detect the temperature of a cell and/or module on at least one point of the battery and/or an ambient temperature.

The balancing device may perform a balancing operation of a battery module and/or cells constituting the battery module. The control device may receive state information (e.g., voltage, current, temperature, etc.) of the battery module from the detection device. The control device may monitor and calculate the state of the battery module (e.g., voltage, current, temperature, state of charge (SOC), life span (state of health (SOH)), etc.) on the basis of the state information received from the detection device. In addition, on the basis of the monitored state information, the control device may perform a control function (e.g., temperature control, balancing control, charge/discharge control, etc.) and a protection function (e.g., over-discharge, overcharge, over-current protection, short circuit, fire extinguishing function, etc.). In addition, the control device may perform a wired or wireless communication function with an external device of the battery pack (e.g., a higher level controller or vehicle, charger, power conversion system, etc.).

The control device may control charging/discharging operation and protection operation of the battery. To this end, the control device may include a charge/discharge control unit, a balancing control unit, and/or a protection unit.

The battery management system is a system that monitors the battery state and performs diagnosis and control, communication, and protection functions, and may calculate the charge/discharge state, calculate battery life or state of health (SOH), cut off, as necessary, battery power (e.g., relay control), control thermal management (e.g., cooling, heating, etc.), perform a high-voltage interlock function, and/or may detect and/or calculate insulation and short circuit conditions.

A relay may be a mechanical contactor that is turned on and off by the magnetic force of a coil or a semiconductor switch, such as a metal oxide semiconductor field effect transistor (MOSFET).

The relay control has a function of cutting off the power supply from the battery if (or when) a problem occurs in the vehicle and the battery system and may include one or more relays and pre-charge relays at the positive terminal and the negative terminal, respectively.

In the pre-charge control, there is a risk of inrush current occurring in the high-voltage capacitor on the input side of the inverter when the battery load is connected. Thus, to prevent inrush current when starting a vehicle, the pre-charge relay may be operated before connecting the main relay and the pre-charge resistor may be connected.

The high-voltage interlock is a circuit that uses a small signal to detect whether or not all high-voltage parts of the entire vehicle system are connected and may have a function of forcibly opening a relay if (or when) an opening occurs at even one location on the entire loop.

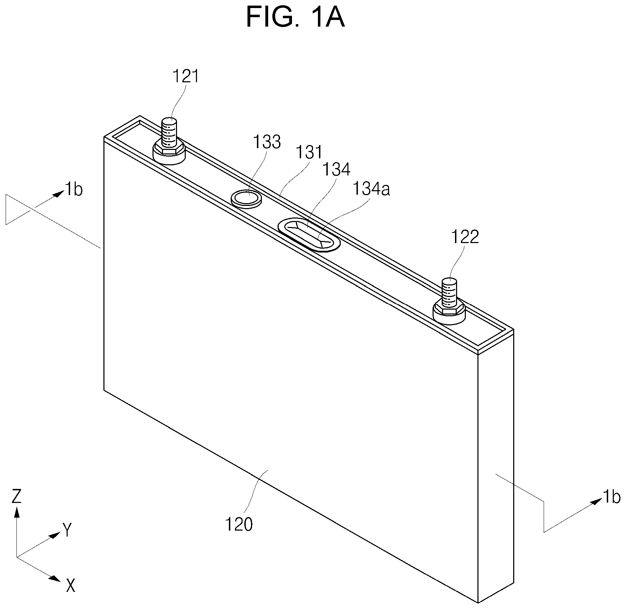

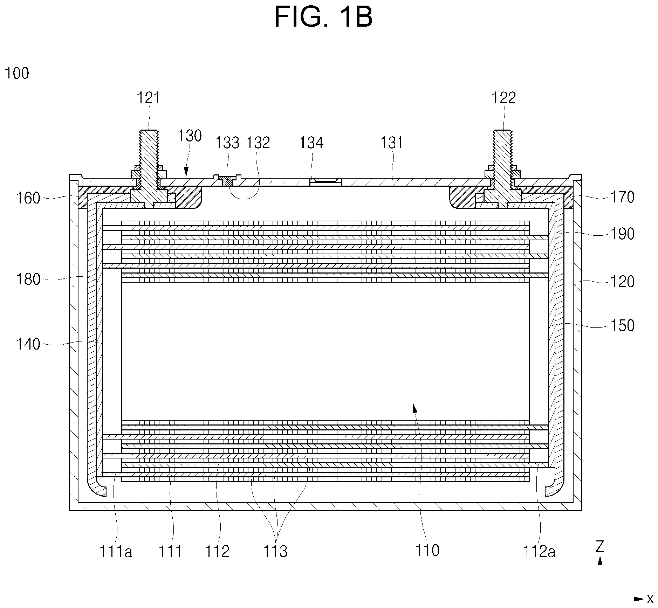

FIGS. 1A is a perspective view illustrating a secondary battery according to one or more embodiments of the present disclosure, and FIG. 1B is a cross-sectional view taken along the line 1b-1b in FIG. 1A.

Referring to FIGS. 1A and 1B, the secondary battery 100 according to one or more embodiments of the present disclosure may include at least one electrode assembly 110 wound with a separator 113 as an insulator between the positive electrode 111 and the negative electrode 112, a case 120 in which the electrode assembly 110 is received (or accommodated) therein, and a cap assembly 130 coupled to an opening of the case 120.

The secondary battery 100 according to one or more embodiments illustrated in FIGS. 1A and 1B will now be described as an example of a prismatic lithium-ion secondary battery. However, the present disclosure is not limited thereto, and suitable aspects, features and principles described herein may be applied to various other types of batteries, such as lithium polymer batteries and/or cylindrical batteries.

Each of the positive electrode 111 and the negative electrode 112 may include a current collector made of a thin metal foil having a coated portion on which an active material is coated and an uncoated portion 111a, 112a, respectively, on which an active material is not coated.

The positive electrode 111 and the negative electrode 112 are wound after positioning the separator 113, which is an insulator, therebetween. However, the present disclosure is not limited thereto, and the electrode assembly 110 may have a structure in which a positive electrode 111 and a negative electrode 112, each made of a plurality of sheets, are alternately stacked with a separator positioned therebetween.

The case 120 may form the overall outer appearance of the secondary battery 100 and may be made of a conductive metal, such as aluminum, aluminum alloy, or nickel-plated steel. In addition, the case 120 may provide an interior space in which the electrode assembly 110 is accommodated.

The cap assembly 130 may include a cap plate 131 covering an opening in the case 120, and the case 120 and the cap plate 131 may be made of a conductive material. The positive and negative electrode terminals 121 and 122, which are electrically connected to the positive electrode 111 and the negative electrode 112, respectively, may penetrate (or extend through) the cap plate 131 and protrude outwardly therethrough.

In addition, outer peripheral surfaces (e.g., circumferential surfaces) of upper pillars of the positive and negative electrode terminals 121 and 122 protruding outwardly from the cap plate 131 may be threaded and may be fixed to the cap plate 131 utilizing nuts.

However, the present disclosure is not limited thereto, and the positive and negative electrode terminals 121 and 122 may have a rivet structure and may be riveted or welded to the cap plate 131.

In addition, the cap plate 131 may be made of a thin plate and may be coupled to the opening in the case 120, and an electrolyte injection port 132 into which a sealing stopper 133 may be installed may be located (e.g., formed) in the cap plate 131, and a vent portion 134 having a notch 134a may be provided in the cap plate 131.

The positive and negative electrode terminals 121 and 122 may be electrically connected to current collectors including first and second current collectors 140 and 150 (hereinafter referred to as positive and negative current collectors, respectively) by being bonded or coupled (e.g., by welding) to the positive uncoated portion 111a and the negative electrode uncoated portion 112a, respectively.

In one or more embodiments, the positive and negative electrode terminals 121 and 122 may be coupled by welding to the positive and negative electrode current collectors 140 and 150, respectively. However, the present disclosure is not limited thereto, and the positive and negative electrode terminals 121 and 122 and the positive and negative electrode current collectors 140 and 150 may be integrally formed in one or more embodiments or coupled in any other suitable manner.

In addition, an insulation member may be between the electrode assembly 110 and the cap plate 131. The insulation member may include first and second lower insulation members 160 and 170, and each of the first and second lower insulation members 160 and 170 may also have a portion located between the electrode assembly 110 and the case 120.

In addition, according to one or more embodiments of the present disclosure, one end of a separation member 180 or 190 may face one side of the electrode assembly 110 and may be between one of the insulation members 160 or 170 and a corresponding one of the positive or negative electrode terminals 121 and 122.

In one or more embodiments, the separation member may include first and second separation members 180 and 190.

In one or more embodiments, first ends of the first and second separation members 180 and 190 that face one side of the electrode assembly 110 may be installed between one of the first and second lower insulation members 160 and 170 and a corresponding one of the positive and negative electrode terminals 121 and 122.

Accordingly, the positive and negative electrode terminals 121 and 122, which may be coupled by welding to the positive and negative electrode current collectors 140 and 150, respectively, may be coupled to first ends of the first and second lower insulation members 160 and 170, respectively, and the first and second separation members 180 and 190, respectively.

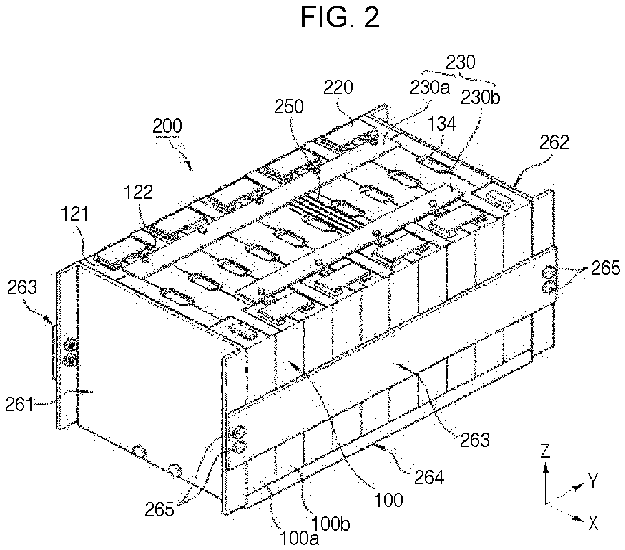

FIG. 2 is a perspective view illustrating a battery module according to one or more embodiments of the present disclosure.

Referring to FIG. 2, the battery module 200 according to one or more embodiments of the present disclosure includes electrode units 121 and 122, a plurality of battery cells 100 arranged in one direction, a plurality of connection tabs 220 each connecting a battery cell 100a to an adjacent battery cell 100b, and a protection circuit module 230 connected to the connection tabs 220. The protection circuit module 230 may include a battery management system (BMS). In one or more embodiments, each of the connection tabs 220 may include a body portion in contact with the electrode units 121 and 122 between the adjacent battery cells 100a and 100b and an extension portion extending from the body portion and connected to the protection circuit module 230. The connection tab 220 may be, for example, a bus bar.

Each battery cell 100 may include a battery case, an electrode assembly received (or accommodated) in the battery case, and an electrolyte. The electrode assembly and the electrolyte react electrochemically to store and release (e.g., generate) energy. Terminal parts 121 and 122 electrically connected to the connection tab 220 and a vent 134 configured to form a discharge passage for gas generated inside the battery case may be provided on one side of (e.g., an upper side of) the battery cell 100. The terminal parts 121 and 122 of the battery cell 100 may be a positive electrode terminal 121 and a negative electrode terminal 122 having different polarities from each other, and the terminal parts 121 and 122 of the adjacent battery cells 100a and 100b may be electrically connected to each other in series or parallel by the connection tabs 220, to be described in more detail below. Although a serial connection has been described as an embodiment, the connection structure is not limited thereto, and various connection structures may be employed in other embodiments. In addition, the number and arrangement of battery cells is not limited to the structure shown in FIG. 2 and may be changed as desired or necessary.

The plurality of battery cells 100 may be arranged in (e.g., may be stacked in) one direction so that the wide surfaces of the battery cells 100 face each other, and the plurality of battery cells 100 may be fixed by the housings 261, 262, 263, and 264. The housings 261, 262, 263, and 264 may include a pair of end plates 261 and 262 facing the wide surfaces of the battery cells 100 and a pair of side plates 263 facing the narrow surfaces of the battery cells 100 and a bottom plate 264 connecting the pair of end plates 261 and 262 to each other. The side plates 263 may support side surfaces (i.e., the narrow surfaces) of the battery cells 100, and the bottom plate 264 may support bottom surfaces of the battery cells 100. In addition, the pair of end plates 261 and 262, the side plates 263, and the bottom plate 264 may be connected by bolts 265 and/or any other suitable fastening members and/or methods known to those of ordinary skill in the art.

The protection circuit module 230 may have electronic components and protection circuits mounted thereon and may be electrically connected to the connection tabs 220, to be described in more detail later. The protection circuit module 230 includes a first protection circuit module 230a and a second protection circuit module 230b extending along the direction in which the plurality of battery cells 100 are arranged in different locations (e.g., extending along the Y-direction). The first protection circuit module 230a and the second protection circuit module 230b may be spaced from each other (e.g., in the X-direction) at a suitable interval (e.g., a predetermined interval) and arranged parallel (or approximately parallel) to each other to be electrically connected to different sets of the connection tabs 220. In one or more embodiments, the first protection circuit module 230a extends on one side of the upper portion of the plurality of battery cells 100 along the direction in which the plurality of battery cells 100 are arranged (e.g., the Y-direction), and the second protection circuit module 230b extends to the other upper side of the plurality of battery cells 100 along the direction in which the plurality of battery cells 100 are arranged. The second protection circuit module 230b may be spaced from the first protection circuit module 230a at a suitable interval (e.g., a predetermined interval) with the vents 134 between the first and second protection circuit modules 230a, 230b. The vents 134 may be parallel to the first and second protection circuit modules 230a, 230b. As such, the two protection circuit modules 230a, 230b are spaced from each other side-by-side along the direction in which the plurality of battery cells 100 are arranged (e.g., the Y-direction), thereby reducing or minimizing the area of the printed circuit board (PCB) constituting the protection circuit module. By separately configuring the protection circuit module into two protection circuit modules 230a, 230b, unnecessary PCM area can be reduced or minimized. In addition, the first protection circuit module 230a and the second protection circuit module 230b may be connected to each other by a conductive connection member 250. One side of the conductive connection member 250 is connected to the first protection circuit module 230a, and the other side of the conductive connection member 250 is connected to the second protection circuit module 230b so that the two protection circuit modules 230a and 230b can be electrically connected to each other.

The connection may be performed by soldering, resistance welding, laser welding, projection welding and/or any other suitable connection methods known to those of ordinary skill in the art.

In one or more embodiments, the connection member 250 may be, for example, an electric wire. In addition, the connection member 250 may be made of a material having elasticity or flexibility. The connecting member 250 enables checking and/or managing whether the voltage, temperature, and/or current of the plurality of battery cells 100 are normal. In one or more embodiments, the information received by the first protection circuit module 230a from connection tabs 220 adjacent to the first protection circuit module 230a, such as voltage, current, and/or temperature, and the information received by the second protection circuit module 230b from connection tabs 220 adjacent to the second protection circuit module 230b, such as voltage, current, and/or temperature, may be integrated and managed by the protection circuit module 230 through the connection member 250.

In addition, when the battery cell 100 swells, shocks may be absorbed by the elasticity or flexibility of the connection member 250, thereby preventing the first and second protection circuit modules 230a and 230b from being damaged.

In addition, the shape and structure of the connection member 250 is not limited to the shape and structure shown in FIG. 2.

As described above, because the protection circuit module 230 is provided as the first and second protection circuit modules 230a and 230b, the area of the PCB of the protection circuit module 230 can be reduced or minimized, and the space inside the battery module 200 can be accessed which improves work efficiency by facilitating connecting the connection tabs 220 and the protection circuit module 230 and performing repair work if (or when) an abnormality is detected in the battery module 200.

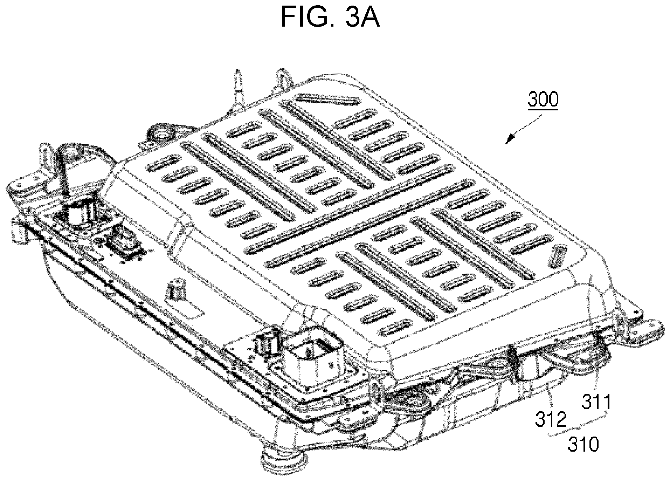

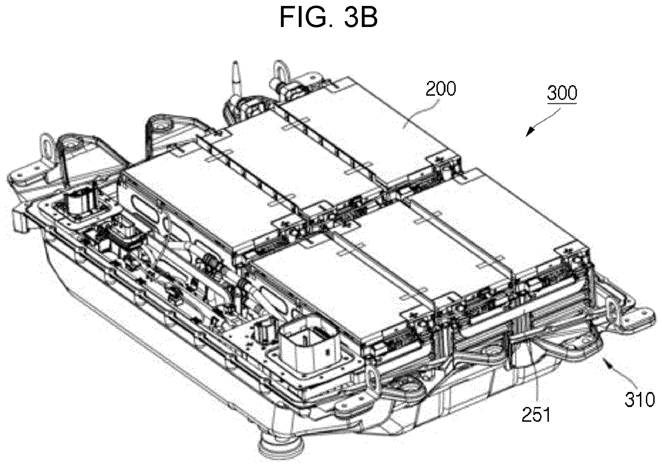

FIGS. 3A and 3B show a battery pack according to one or more embodiments of the present disclosure.

The battery pack may include a plurality of battery modules 200 and a housing 310 for accommodating the plurality of battery modules 200. In one or more embodiments, the housing 310 may include first and second housings 311 and 312 coupled in opposite directions (e.g., upper and lower directions) around the plurality of battery modules 200. The plurality of battery modules 200 may be electrically connected to each other by using a bus bar 251 (shown in FIG. 3B), and the plurality of battery modules 200 may be electrically connected to each other in series, in parallel, or a combination of series and parallel (i.e., a series-parallel mixed method), thereby obtaining desired (e.g., required) electrical output.

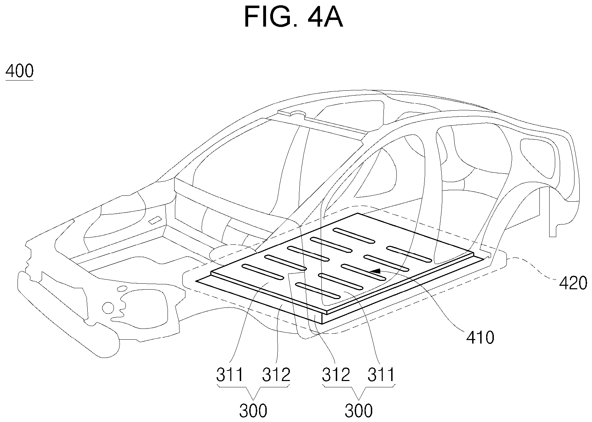

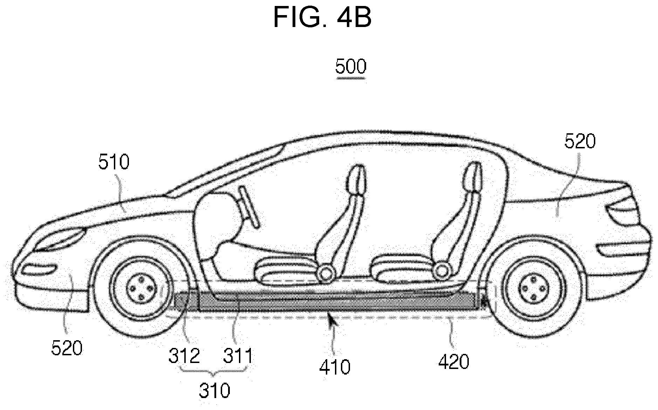

FIGS. 4A and 4B show a vehicle body and vehicle body parts having a battery pack according to one or more embodiments of the present disclosure.

In FIG. 4A, a battery pack 300 may include a battery pack cover 311, which is a part of a vehicle underbody 410, and a pack frame 312 under the vehicle underbody 410. The pack frame 312 and the battery pack cover 311 may be integral with a vehicle floor 420 of the vehicle.

The vehicle underbody 410 separates the inside and the outside of a vehicle, and the pack frame 312 may be outside the vehicle.

FIG. 4B is a schematic side view of a vehicle according to one or more embodiments of the present disclosure.

A vehicle 500 may be formed by combining additional parts, such as a hood 510 in front of the vehicle and fenders 520 respectively located in the front and rear of the vehicle to a vehicle body 400.

The vehicle 500 may further include a vehicle floor 420, which is one of the vehicle body parts 400 including the battery pack 300, which includes the pack frame 312 and the battery pack cover 311.

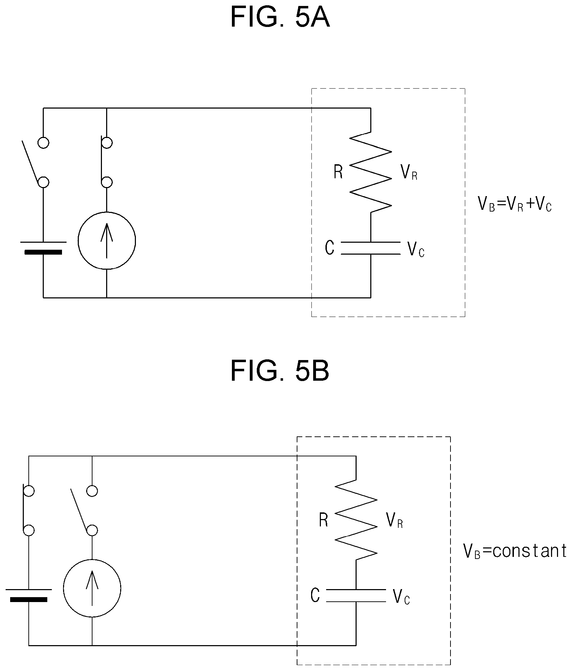

FIGS. 5A to 5D illustrate a method for charging a secondary battery according to an embodiment of the present disclosure. A secondary battery may be charged and discharged by, for example, the following manner:

### « <<CCCV(Constant Current Constant Voltage) charging»

CCCV charging is a charging method in which constant current (CC) charging is performed until the voltage reaches a suitable or reference voltage (e.g., a predetermined voltage), and then constant voltage (CV) charging is performed until the amount of current flowing decreases until the end current value is achieved.

During CC charging, as shown in FIG. 5A, a switch of a constant current power supply is turned on and a switch of a constant voltage power supply is turned off so that a constant (or substantially constant) current I flows through the secondary battery. During the CC charging process, because the current I is constant, a voltage VR applied to an internal resistor R is also constant according to Ohm's law (VR=R×I). Additionally, a voltage VC applied to a secondary battery capacitor C increases with time. Therefore, a secondary battery voltage VB may increase over time.

When (or if) the secondary battery voltage VB reaches a suitable or reference voltage (e.g., a predetermined voltage), for example, about (approximately) 4.3 V, CC charging is switched to CV charging. During CV charging, as shown in FIG. 5B, the switch of the constant voltage power supply is turned on and the switch of the constant current power supply is turned off so that the secondary battery voltage VB is constant (or substantially constant). The voltage VC applied to the secondary battery capacitor C increases with time. Because VB = VR + VC, the voltage VR applied to the internal resistor R decreases with time. As the voltage VR applied to the internal resistor R decreases, the current I flowing through the secondary battery may also decrease according to Ohm's law (VR=R×I).

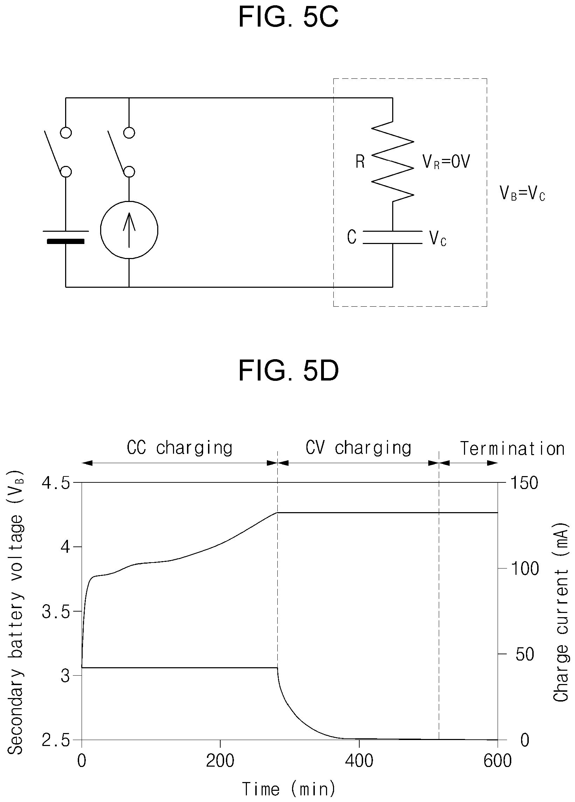

When (or if) the current I flowing through the secondary battery reaches a suitable or reference current (e.g., a predetermined current), for example, about (approximately) 0.01 C, charging is terminated. When (or if) CCCV charging is finished, all switches are turned off and the current I becomes 0, as shown in FIG. 5C. Thus, the voltage VR applied to the internal resistor R becomes 0 V (or approximately 0 V). Accordingly, even when voltage drop is prevented across the internal resistor R, the secondary battery voltage VB substantially does not decrease (e.g., the secondary battery voltage VB is substantially constant).

FIG. 5D shows a graph of a secondary battery voltage VB and charging current during CCCV charging and after CCCV charging is terminated. As illustrated in FIG. 5D, after CCCV charging is terminated, the secondary battery voltage VB substantially does not decrease (e.g., the secondary battery voltage VB is substantially constant after CCCV charging is terminated).

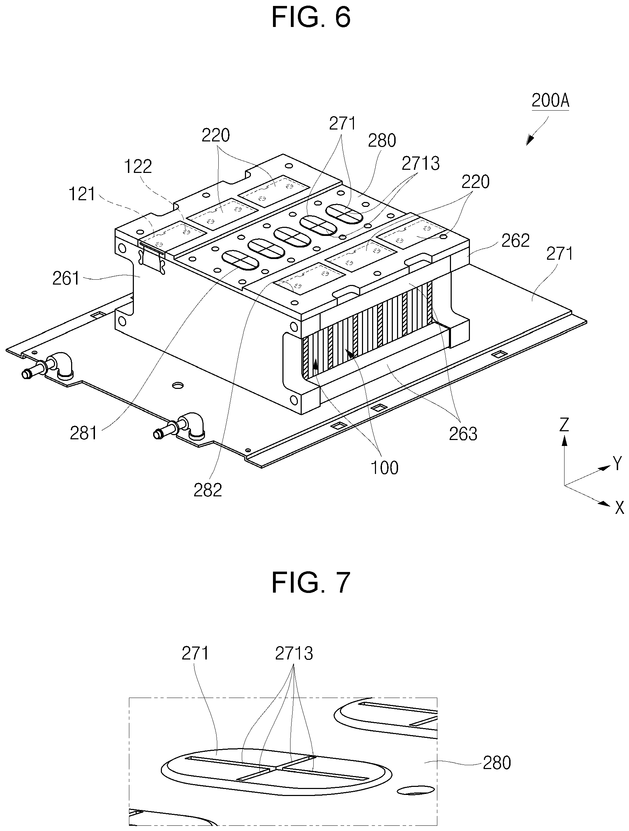

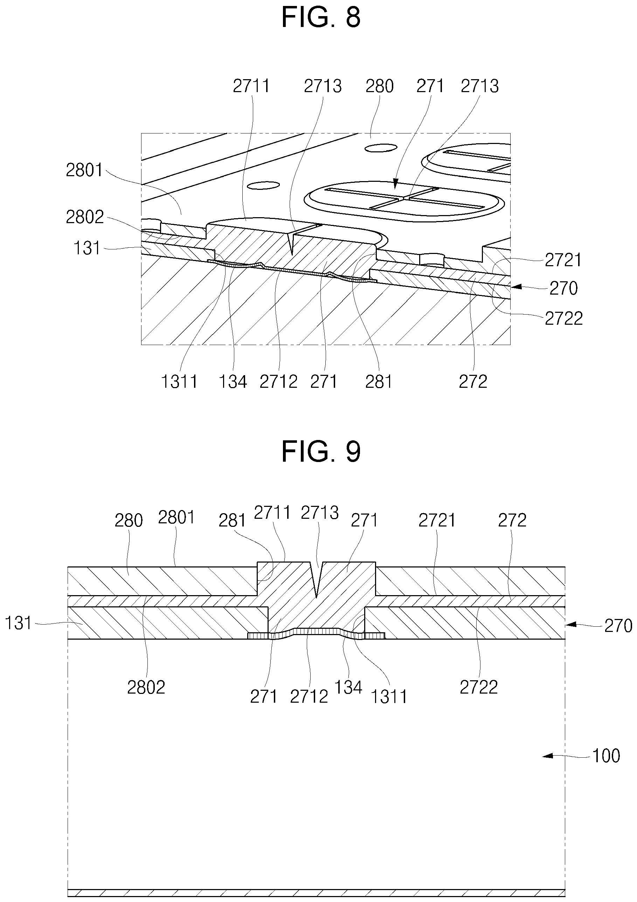

FIG. 6 is a perspective view showing a battery module 200A according to an embodiment of the present disclosure, FIG. 7 is an enlarged view of a partial area of FIG. 6, FIG. 8 is an enlarged cross-sectional perspective view cut away from a portion of FIG. 6, and FIG. 9 is an enlarged cross-sectional view cut away from a portion of FIG. 6.

As shown in FIGS. 6 to 9, the battery module 200A according to one embodiment of the present disclosure may include a plurality of battery cells 100, a heat-resistant portion 270, a bus bar holder 280, and bus bars 220.

The plurality of battery cells 100 may be arranged in a horizontal direction (e.g., along the Y-axis direction).

As described above, the plurality of battery cells 100 may be on a cooling member 271. In addition, as described above, the plurality of battery cells 100 may be fixed by housings 261, 262, and 263 (see FIG. 2). In one or more embodiments, the side housing 263 may include an opening, and thus, some side portions of the battery cells 100 may be exposed to the outside through the opening.

As described above, each of the plurality of battery cells 100 may include a cell vent 134 (or vent portion), a positive electrode terminal 121, and a negative electrode terminal 122 (see FIGS. 1A, 1B, and 2). In one or more embodiments, for each of the battery cells 100, the positive electrode terminal 121 and the negative electrode terminal 122 may be on opposite sides of the cell vent 134.

The heat-resistant portion 270 may be potted on the plurality of battery cells 100. The heat-resistant portion 270 may include a plurality of heat-resistant vents 271 and a heat-resistant support portion 272 (see FIG. 9). The heat-resistant vents 271 may be provided in an area or areas corresponding to the cell vents 134 of the battery cells 100 (e.g., the heat-resistant vents 271 may be aligned or substantially aligned with the cell vents 134). Each of the heat-resistant vents 271 may include a substantially flat upper surface 2711 and a substantially flat lower surface 2712 that is opposite to the upper surface 2711. The heat-resistant support portion 272 may be outside the heat-resistant vents 271. The heat-resistant support portion 272 may include a substantially flat upper surface 2721 and a substantially flat lower surface 2722 that is opposite to the upper surface 2721. In one or more embodiments, the heat-resistant support portion 272 may be between the plurality of battery cells 100 and the bus bar holder 280. In one or more embodiments, the heat-resistant support portion 272 may be on (e.g., directly on) the cap plate 131 of the battery cells 100.

Each of the heat-resistant vents 271 may include a notch 2713 having a depth. In one or more embodiments, the notch 2713 may extend from the upper surface 2711 of the heat-resistant vent 271 downward toward the lower surface 2712. In one or more embodiments, the notch 2713 may become gradually smaller in width from the upper surface 2711 of the heat-resistant vent 271 to the lower surface 2712 of the heat-resistant vent 271.

In one or more embodiments, the depth of the notch 2713 may be approximately 1/3 to approximately 2/3 of the overall thickness of the heat-resistant vent 271. If the depth of the notch 2713 is less than approximately 1/3 of the overall thickness of the heat-resistant vent 271, the heat-resistant vent 271 may not be broken when an event (e.g., flame emission) occurs in any one of the battery cells 100, and thus, internal flames of the battery cell 100 may not be discharged to the outside. If the depth of the notch 2713 is greater (deeper) than approximately 2/3 of the overall thickness of the heat-resistant vent 271, the heat-resistant vent 271 may be too easily broken when a relatively small external impact is applied to the battery module 200A or the battery cell 100.

In one or more embodiments, the planar shape of the notch 2713 may include a single straight line, multiple parallel straight lines, or a cross shape. Due to the shape of the notch 2713, when an event occurs in the battery cell 100, the heat-resistant vent 271 may be easily broken and the internal flame of the battery cell 100 may be discharged to the outside.

In one or more embodiments, each of the heat-resistant vents 271 may be in close proximity to (e.g., in direct contact with) and/or adhered to one of the cell vents 134 of the battery cell 100. Therefore, when the cell vent 134 of the battery cell 100 is broken, the corresponding heat-resistant vent 271 may also be easily broken.

In one or more embodiments, the thickness of the heat-resistant vent 271 (or at least the thickness of the heat-resistant vent 271 at the notch 2713) may be smaller than the thickness of the heat-resistant support portion 272. In one or more embodiments, the upper surface 2711 of the heat-resistant vent 271 may be higher than the upper surface 2721 of the heat-resistant support portion 272. In one or more embodiments, the heat-resistant vent 271 may protrude upward from the heat-resistant support portion 272. In one or more embodiments, the upper surface 2711 of the heat-resistant vent 271 may be coplanar (or substantially coplanar) with the upper surface 2721 of the heat-resistant support portion 272. In one or more embodiments, the lower surface 2712 of the heat-resistant vent 271 may be lower than the lower surface 2722 of the heat-resistant support portion 272. In one or more embodiments, the heat-resistant vent 271 may protrude downward from the heat-resistant support portion 272.

In one or more embodiments, the cell vent 134 may be coupled to the cell vent hole 1311 of the battery cell 100, and the corresponding heat-resistant vent 271 may be coupled to or inserted into the cell vent hole 1311. In one or more embodiments, the cell vent 134 may be coupled to approximately the central area of the cell vent hole 1311 in the height direction (e.g., the Z-axis direction), and the heat-resistant vent 271 connected to the cell vent hole 1311 may extend to approximately the central area. In one or more embodiments, the cell vent 134 may be coupled to approximately the lower region of the cell vent hole 1311 in the height direction (e.g., the Z-axis direction), and the heat-resistant vent 271 may extend to approximately the lower region of the cell vent hole 1311.

In one or more embodiments, the heat-resistant portion 270 may include epoxy or silicone. In one or more embodiments, the epoxy may include an epoxy resin, a curing agent, and an inorganic filler. In one or more embodiments, the silicone may include a silicone resin, a curing agent, and an inorganic filler. The inorganic filler relative to the total weight of the heat-resistant portion 270 may be approximately 5 wt% to approximately 95 wt%. If the weight ratio of the inorganic filler is less than approximately 5wt%, workability is excellent due to low viscosity, but heat resistance may be reduced. If the weight ratio of the inorganic filler is greater than approximately 95 wt%, heat resistance is excellent, but workability may be reduced due to high viscosity. The inorganic filler may include nano- or micro-scale silica, alumina, glass fiber, magnesia, etc.

The bus bar holder 280 may be on (e.g., directly on) the heat-resistant portion 270. The bus bar holder 280 may include a substantially flat upper surface 2801 and a substantially flat lower surface 2802 that is opposite to the upper surface 2801. In one or more embodiments, the lower surface 2802 of the bus bar holder 280 may be in close proximity to (e.g., in contact or direct contact with) the upper surface 2721 of the heat-resistant support portion 272. In one or more embodiments, the upper surface 2801 of the bus bar holder 280 may be exposed to the outside. In one or more embodiments, the bus bar holder 280 may include holder vent holes 281 in areas corresponding to the locations of the heat-resistant vents 271, and bus bar holes 282 in areas corresponding to the locations of the positive electrode terminal 121 and the negative electrode terminal 122 of each of the battery cells 100. The bus bar holder 280 may be or include an insulating member or an insulating plate. The bus bar holder 280 may include polyethylene terephthalate (PET), high density polyethylene (HDPE), low density polyethylene (LDPE), polypropylene (PP), polystyrene (PS), or polyvinyl chloride (PVC). The bus bar holder 280 supports a plurality of bus bars 220, which will later be described, and prevents the battery cells 100 from directly electrically or mechanically contacting various electrical components located outside the battery module 200A.

In one or more embodiments, each of the heat-resistant vents 271 may protrude upward from the heat-resistant support portion 272. In one or more embodiments, the heat-resistant vent 271 may be coupled to or inserted into the holder vent hole 281 of the bus bar holder 280. In one or more embodiments, the lower surface 2712 of the heat-resistant vent 271 may be lower than the lower surface 2722 of the heat-resistant support portion 272. In one or more embodiments, the heat-resistant vent 271 may protrude downward from the heat-resistant support portion 272.

In one or more embodiments, the upper surface 2711 of each of the heat-resistant vents 271 may be higher than the upper surface 2801 of the bus bar holder 280. In one or more embodiments, the upper surface 2711 of the heat-resistant vent 271 may be coplanar (or substantially coplanar) with the upper surface 2801 of the bus bar holder 280. In one or more embodiments, the upper surface 2711 of each of the heat-resistant vents 271 and the upper surface 2721 of the heat-resistant support portion 272 may be coplanar (or substantially coplanar) with each other. In one or more embodiments, the upper surface 2711 of each of the heat-resistant vents 271 may be coplanar (or substantially coplanar) with the lower surface 2802 of the bus bar holder 280. In one or more embodiments, the upper surface 2711 of each of the heat-resistant vents 271 may be located below the holder vent hole 281.

The plurality of bus bars 220 may be on the heat-resistant portion 270 and electrically connected to the positive electrode terminal 121 and the negative electrode terminal 122 of the plurality of battery cells 100. In one or more embodiments, one bus bar 220 may electrically connect the positive electrode terminal 121 of one-side battery cell 100a and the negative electrode terminal 122 of the other-side battery cell 100b such that the battery cells 100 are connected in series. In one or more embodiments, one bus bar 220 may electrically connect the positive electrode terminal 121 (or the negative electrode terminal 122) of one-side battery cell 100a and the positive electrode terminal 121 (or the negative electrode terminal 122) of the other-side battery cell 100b such that the battery cells 100 are connected in parallel. In one or more embodiments, each of the bus bars 220 may be located in one of the bus bar holes 282 of the bus bar holder 280.

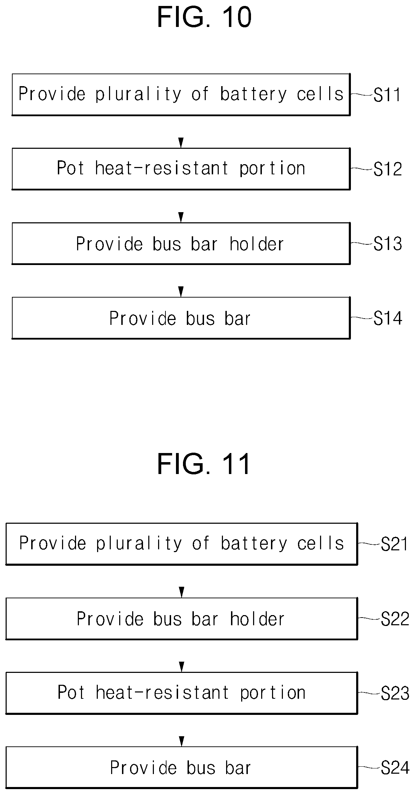

FIG. 10 is a flow chart showing a method for manufacturing a battery module 200A according to one embodiment of the present disclosure. As shown in FIG. 10, the method for manufacturing the example battery module 200A according to one embodiment of the present disclosure may include the steps of: (S11) providing a plurality of battery cells 100; (S12) potting a heat-resistant portion 270; (S13) providing a bus bar holder 280; and (S14) providing a plurality of bus bars 220.

In the step (S11) of providing a plurality of battery cells 100, the plurality of battery cells 100 arranged in the horizontal direction (e.g., the Y-axis direction) may be provided. In one or more embodiments, each of the plurality of battery cells 100 may include a cell vent 134, a positive electrode terminal 121, and a negative electrode terminal 122.

In the step (S12) of potting a heat-resistant portion 270, the heat-resistant portion 270 may be potted on the plurality of battery cells 100. In one or more embodiments, heat-resistant epoxy or silicone in a liquid state may be potted through a dispenser and then cured. In one or more embodiments, the heat-resistant material may be naturally cured for approximately 5 minutes to approximately 20 minutes. In one or more embodiments, heat and/or light may be additionally provided to quickly cure the heat-resistant material. After the curing process, the heat-resistant portion 270 is substantially flat on the plurality of battery cells 100. The heat-resistant portion 270 may include heat-resistant vents 271 provided in areas corresponding to the positions of the cell vents 134 of the battery cells 100, and a heat-resistant support portion 272 provided on the cap plates 131 of the battery cells 100 outside the heat-resistant vents 271. In one or more embodiments, a straight or cross-shaped notch 2713 may be formed on or in the heat-resistant vents 271 before curing the heat-resistant portion 270. In one or more embodiments, a notching tool may be pressed onto the heat-resistant vents 271 prior to curing of the heat-resistant portion 270, thereby providing a notch 2713 in each of the heat-resistant vents 271 having a depth. In one or more embodiments, the heat-resistant portion 270 may not be provided in an area corresponding to the positive electrode terminal 121 and the negative electrode terminal 122 of each of the battery cells 100. In one or more embodiments, the heat-resistant portion 270 may be potted and cured around the positive electrode terminal 121 and the negative electrode terminal 122 of each of the battery cells 100, and thus the heat resistant portion 270 may be exposed to the outside. In one or more embodiments, when potting the heat-resistant material, a fence or border may installed around the upper surface of the battery cells 100 to prevent the heat-resistant material from flowing into an unwanted area.

In the step (S13) of providing the bus bar holder 280, the bus bar holder 280 may be provided on the heat-resistant portion 270. In one or more embodiments, the bus bar holder 280 may be provided prior to curing of heat-resistant portion 270. In one or more embodiments, the bus bar holder 280 may be provided after curing of heat-resistant portion 270. In one or more embodiments, the bus bar holder 280 may include holder vent holes 281 in areas corresponding to the heat-resistant vents 271, and bar holes 282 in areas corresponding to the positive electrode terminal 121 and the negative electrode terminal 122 of each of the battery cells 100.

In the step (S14) of providing the bus bars 220, the positive electrode terminal 121 and the negative electrode terminal 122 of each of the plurality of battery cells 100 on the heat-resistant portion 270 may be connected to the bus bars 220. In one or more embodiments, the positive electrode terminal 121 of one-side battery cell 100a and the negative electrode terminal 122 of the other-side battery cell 100b may be connected to the bus bar 220 such that the battery cells 100 are connected in series. In one or more embodiments, the positive electrode terminal 121 of one-side battery cell 100a and the positive electrode terminal 121 of the other-side battery cell 100b may be connected to the bus bar 220 such that the battery cells 100 are connected in parallel.

FIG. 11 is a flow chart showing a method for manufacturing a battery module 200A according to one embodiment of the present disclosure. As shown in FIG. 11, the method for manufacturing the battery module 200A according to one embodiment of the present disclosure may include the steps of: (S21) providing a plurality of battery cells 100; (S22) providing a bus bar holder 280; (S23) potting a heat-resistant portion 270; and (S24) providing a plurality of bus bars 220. The manufacturing method shown in FIG. 11 is the same or similar to the manufacturing method shown in FIG. 10, except that the order of the step of providing the bus bar holder 280 and the step of potting the heat-resistant portion 270 is changed. Therefore, only the differences will be explained.

In the step (S22) of providing the bus bar holder 280, the bus bar holder 280 may be provided on the plurality of battery cells 100. In one or more embodiments, the bus bar holder 280 may include a plurality of holder vent holes 281 provided in areas corresponding to the cell vents 134 of the battery cells 100, and a plurality of bus bar holes 282 provided in areas corresponding to a positive electrode terminal 121 and a negative electrode terminal 122 of the battery cells 100.

In the step (S23) of potting the heat-resistant portion 270, the heat-resistant portion 270 may be potted in the space between the plurality of battery cells 100 and the bus bar holder 280. In one or more embodiments, heat-resistant epoxy or silicone in a liquid state may be potted into the space between the plurality of battery cells 100 and the busbar holder 280 through a dispenser and then cured. Following the curing process, the heat-resistant portion 270 may be substantially flat and may be provided between the plurality of battery cells 100 and the bus bar holder 280. The heat-resistant portion 270 may include a plurality of heat-resistant vents 271 and each heat-resistant vent 271 may be provided in an area corresponding to one of the cell vents 134 of one of the battery cells 100 and a corresponding holder vent hole 281 of the bus bar holder 280. The heat-resistant portion 270 may also include a heat-resistant support portion 272 provided between one of the battery cells 100 outside the corresponding heat-resistant vent 271 and the bus bar holder 280. In one or more embodiments, a straight or cross-shaped notch 2713 may be provided on the heat-resistant vent 271 before curing the heat-resistant portion 270. In one or more embodiments, a notching tool may be pressed onto the heat-resistant vent 271 before curing the heat-resistant portion 270, thereby providing the notch 2713 having a depth. In one or more embodiments, when potting the heat-resistant material, a fence or border may be installed around the battery cells 100 and the bus bar holder 280 to prevent the heat-resistant material from flowing into an unwanted area.

Although the present disclosure has been described by limited embodiments and drawings, the present disclosure is not limited thereto. Various modifications and variations can be made by a person skilled in the art to which the present disclosure belongs within the scope of equivalency of the technical idea of the present disclosure and the scope of the present invention as set forth in the following claims.

## Claims

1. A battery module comprising:
a plurality of battery cells arranged in a horizontal direction, each of the plurality of battery cells comprising a cell vent, a positive electrode terminal, and a negative electrode terminal;
a heat-resistant portion potted on the plurality of battery cells, the heat-resistant portion comprising a heat-resistant vent in an area corresponding to the cell vent of one of the plurality of battery cells and a heat-resistant support portion outside the heat-resistant vent;
a bus bar holder on the heat-resistant portion, the bus bar holder comprising a holder vent hole in an area corresponding to the heat-resistant vent and a bus bar hole in an area corresponding to the positive electrode terminal and the negative electrode terminal of one of the plurality of battery cells; and
a plurality of bus bars on the heat-resistant portion and connected to the positive electrode terminal and the negative electrode terminal of the plurality of battery cells.

2. The battery module as claimed in claim 1, wherein the heat-resistant vent comprises a notch.

3. The battery module as claimed in claim 2, wherein a depth of the notch is about 1/3 to about 2/3 of a thickness of the heat-resistant vent.

4. The battery module as claimed in claim 2 or 3, wherein a planar shape of the notch comprises a cross shape.

5. The battery module as claimed in any preceding claim, wherein the heat-resistant vent contacts the cell vent.

6. The battery module as claimed in any preceding claim, wherein a thickness of the heat-resistant vent is greater than a thickness of the heat-resistant support portion.

7. The battery module as claimed in any preceding claim, wherein the heat-resistant vent protrudes downward from the heat-resistant support portion.

8. The battery module as claimed in any preceding claim, wherein the cell vent is coupled to a lower portion of a cell vent hole of one of the plurality of battery cells, and wherein the heat-resistant vent is coupled to the cell vent hole.

9. The battery module as claimed in any preceding claim, wherein the heat-resistant portion comprises epoxy or silicone.

10. The battery module as claimed in any preceding claim, wherein an upper surface of the heat-resistant vent and an upper surface of the heat-resistant support portion are coplanar.

11. The battery module as claimed in any preceding claim, wherein the heat-resistant vent protrudes upward from the heat-resistant support portion.

12. The battery module as claimed in any preceding claim, wherein the heat-resistant vent is coupled to the holder vent hole.

13. The battery module as claimed in any preceding claim, wherein a surface of the heat-resistant vent is coplanar with an upper surface of the bus bar holder.

14. A method for manufacturing a battery module, the method comprising:
providing a plurality of battery cells arranged in a horizontal direction, each of the plurality of battery cells comprising a cell vent, a positive electrode terminal, and a negative electrode terminal;
potting a heat-resistant portion on the plurality of battery cells, the heat-resistant portion comprising a heat-resistant vent in an area corresponding to the cell vent and a heat-resistant support portion outside the heat-resistant vent;
providing a bus bar holder on the heat-resistant portion, the bus bar holder comprising a holder vent hole in an area corresponding to the heat-resistant vent and a bus bar hole in an area corresponding to the positive electrode terminal and the negative electrode terminal; and
providing a plurality of bus bars on the heat-resistant portion and connecting the positive electrode terminal and the negative electrode terminal of each of the plurality of battery cells.

15. A method for manufacturing a battery module, the method comprising:
providing a plurality of battery cells arranged in a horizontal direction, each of the plurality of battery cells comprising a cell vent, a positive electrode terminal, and a negative electrode terminal;
providing a bus bar holder on the plurality of battery cells, the bus bar holder comprising a holder vent hole in an area corresponding to the cell vent and a bus bar hole in an area corresponding to the positive electrode terminal and the negative electrode terminal of each of the plurality of battery cells;
potting a heat-resistant portion between the plurality of battery cells and the bus bar holder, the heat-resistant portion comprising a heat-resistant vent in an area corresponding to the cell vent and a heat-resistant support portion outside the heat-resistant vent; and
providing a plurality of bus bars on the heat-resistant portion and connecting the positive electrode terminal and negative electrode terminal of each of the plurality of battery cells.
